Europäisches Patentamt

European Patent Office

Office européen des brevets

(19)

(11) Publication number: **0 428 466 A1**

## EUROPEAN PATENT APPLICATION

(12)

(21) Application number: 90500001.4

(22) Date of filing: 10.01.90

(51) Int. Cl.⁵: **E05G 1/00**, B60R 7/04

(30) Priority: 13.11.89 ES 8903849

(43) Date of publication of application:
22.05.91 Bulletin 91/21

(84) Designated Contracting States:
AT BE CH DE DK FR GB GR IT LI LU NL SE

(71) Applicant: Gonzalez Miruri, Alberto
Francisco Silvela, 76
E-28028 Madrid(ES)

(72) Inventor: Gonzalez Miruri, Alberto
Francisco Silvela, 76
E-28028 Madrid(ES)

(74) Representative: De Arpe Fernandez, Luis
ARPE Patentes y Marcas Guzman El Bueno,
133
E-28003 Madrid(ES)

(54) Safety box for automobiles.

(57) For providing a spoliation-resistant safety box for automobiles, there is provided a casing (1) to be inserted in a panel of the vehicle, which has a receptacle or housing (2) slidably coupled in the interior of the casing (1). Electromechanical means (7) for producing the forward/ backward movement of the receptacle (2), so that it is accessible or it is concealed. The safety against spoliation is double, since the receptacle (2) may only be opened by operating the said means (7) through a code codified by a suitable electronic device and in that, the casing (1) and the receptacle (2) are cooperatively provided with a latch-like safety device (19) and a counter-latch (20) inaccessible from the outside.

F I G. 2

EP 0 428 466 A1

## SAFETY BOX FOR AUTOMOBILES.

The present invention relates to a safety box for automobiles comprised of a casing insertable in a vehicle panel, a receptacle for accomodating the protected objects, slidably coupled within the said casing, means for displacing the said receptacle, and a safety device for assuring a higher degree of difficulty in an undesired opening.

Frequently, automobile users have the need to place valuable objects, which are subject to spoliation, in the interior of the vehicle, although currently there are no devices suitable for the said purpose. In fact, several types of "safes" are known, which safes are to be coupled to wall faces and the like, but which are not suitably designed to be coupled in the interior of automobiles. Further, the safety of these safes is mainly based on the strength of their materials which are not too suitable for automobile equipment.

Antecedents of the invention may only be found in the safety devices disclosed in Spanish patent applications Nos. P 8900973 and P 8902293, in the name of the applicant of the present application, but which have essentially been developed to include radio apparatus and the like and which consequently cannot be adequately used as safety boxes.

It is an object of the invention to proportion a safety box of the aforesaid type which is easily adaptable to a vehicle panel.

In accordance with the invention, this object is achieved inasmuch as the box is comprised of:
- A preferably parallelepiped casing capable of being inserted in a vehicle panel;
- A receptacle or housing for the objects to be protected, slidably coupled within the said casing, so that the said receptacle may be displaced between an open position, at which it is accessible from the outside, and a closed concealed position within the said casing;
- Electromechanical means for displacing and guiding the said receptacle or housing with respect to the said casing, between the two aforesaid operating positions;
- A latch-like safety device operatively coupled to the said electromechanical means for opening and closing it, and which prevents the receptacle or housing from being displaced with respect to the casing when the box is in a closed position; and
- An electronic device for operating the said electromechanical means and for freeing the said safety device.

In accordance with the invention, it may be advantageous for the said electronic device to include a codifying device for an opening code or combination. However, if the code is not previously inserted, the said electromechanical means cannot operate.

In a preferred embodiment of the invention, the electromechanical means for opening/closing the box is comprised of an electric motor which, through a set of gears, acts on a connecting rod disposed in a guide-slide assembly for the displacement of the safety receptacle or housing between its two operating positions, and which further serves to displace a latch provided at the posterior part of the casing cooperative with a counter-latch disposed at the posterior part of the receptacle, so that in a closed position the said counter-latch and latch are locked, preventing the mutual displacement of the two portions of the said box. As previously mentioned, the electromechanical means is operated by a simple switch or by an electronic device which may include a suitable code codifying device.

Other characteristics and advantages of the invention will be more fully understood from the following description taken in conjunction with the accompanying drawings showing a non-limiting mode of embodiment, wherein:

Figure 1 illustrates a perspective view of the safety box of the invention, unassembled.

Figures 2 and 3 show respectively plan views, in partial section, of the closed and open positions thereof.

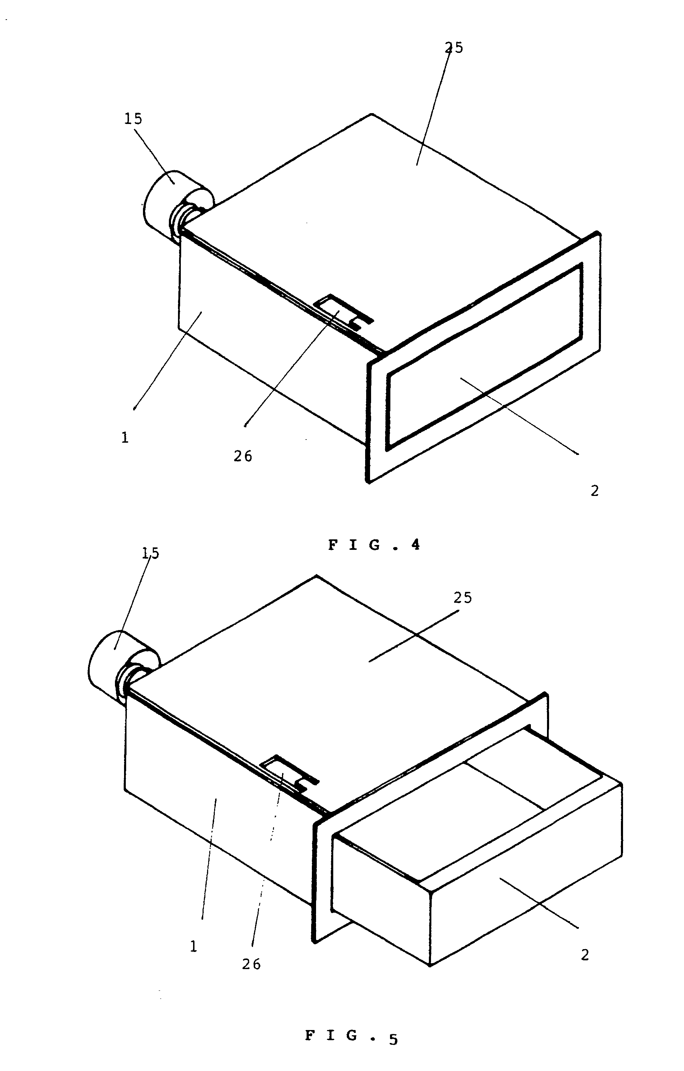

Figures 4 and 5 illustrate perspective views of the safety box of the invention in the closed and open positions.

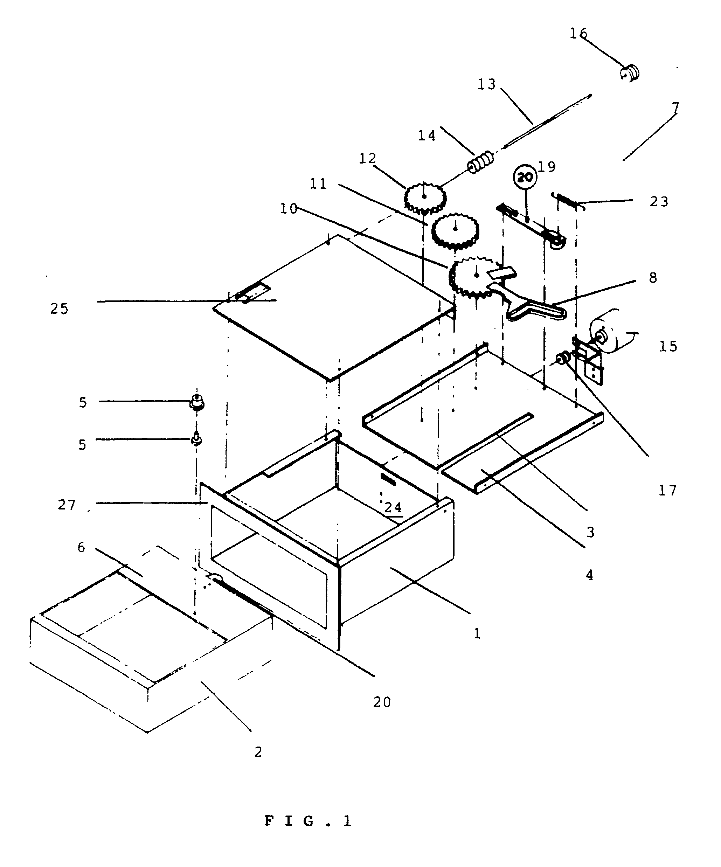

Referring specifically to figure 1, it can be seen that the safety box is comprised of a parallelepiped casing 1 to be inserted in a vehicle panel (not represented) and a receptacle 2 having a similar configuration, slidably coupled within it. This slidable coupling is achieved by means of a guide slot 3 made in an upper flap 4 of the casing 1 and a stem 5 correspondingly provided in the upper base 6 of the said receptacle 2.

With further reference to figure 1, it can be seen that for the displacement of receptacle 2, there is provided electromechanical means 7 comprised of a lever 8 with a guide slot 9 for the coupling of the stem 5, a set of gears 10-11-12, a driving shaft 13 with a worm gear 14 and an electric motor 15; additionally there are provided pulleys 16-17 and a transmission belt 18 for the coupling of the kinematic output of the motor 15 and the shaft 13.

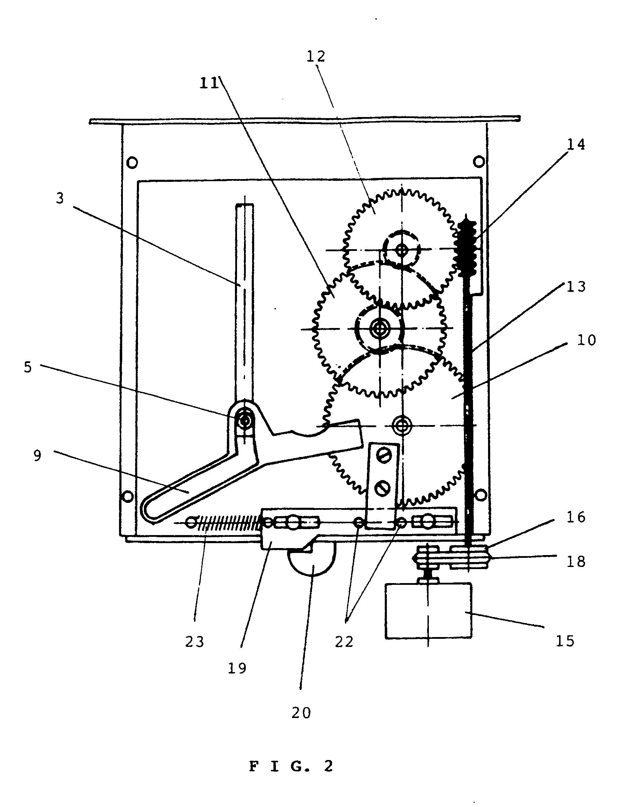

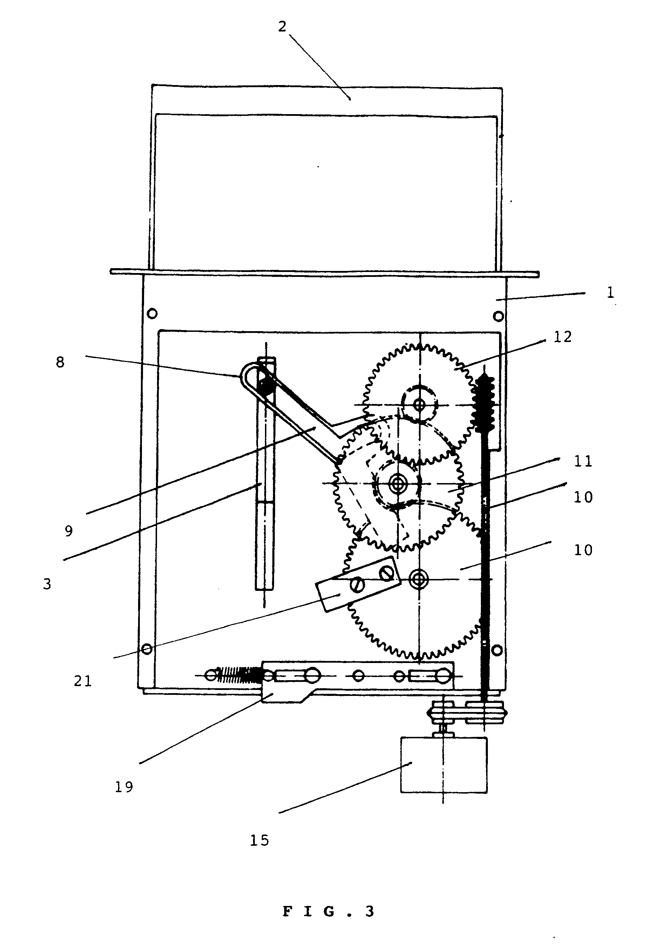

As shown more clearly in figures 2 and 3, the lever 8 is eccentrically mounted on the gear 10, the stem 5 being housed in its guide slot 9, whilst the worm gear 14 meshes with the pinion 12 of the said set of gears. Besides the stem 5 of the receptacle 2 is housed in the other guide slot 3 provided in the flap 4 of the casing 1. In this manner, when the electric motor 15 turns, the lever 8 will cause receptacle 2 to move forwards or backwards with respect to the casing 1. As will be evident to persons skilled in the art, devices for the reversal of the turn of the electric motor 15 will be provided in order to produce the opening or closing of the box. These devices are not represented since they are known per se, and can consequently be arranged in the manner deemed most adequate by the technician.

Referring again to figures 1 to 3, it can be seen that at the posterior part of the casing 1 and slidably mounted thereon, is arranged a latch 19, cooperative with a counter-latch 20 provided at the posterior part of the receptacle 2. For the locking of latch 19, it is activated by a handle 21 eccentrically disposed in the gear 10 of the said set of gears, so that lugs 22 provided in the slidable latch 19 cooperate therewith. Unlocking of the latch 19 and the counter-latch 20 is achieved by a recovery spring 23 which causes the latch 19 to return to its original position when the latch is freed from the pressure which is exerted thereon by the said handle 21. Naturally, the posterior part of the casing 1 is provided with a groove 24 for the counter-latch 20.

Finally, there is provided a second casing flap 25 which closes the assembly and which has a recess 26 for the said worm gear 14.

In accordance with the invention, it is advantageous for the edges of the facade of the receptacle or housing 2 to have a bevelled formation, so that the crevices formed at the coupling zone 27 to the casing are minor, thereby preventing as far as possible the ability to open by forcing with a lever.

As previously mentioned, for the activation of the safety device, there is provided an electronic control device, not represented, which can be connected to a code codifying device which may be arranged in the manner deemed most suitable by the technician since it is known per se.

In compliance with the aforegoing, there is provided a safety box capable of being inserted in a vehicle panel, the opening of which is doubly prevented due to the inability to activate the electromechanical opening/closing means from the outside and to the latch-counterlatch assembly.

Having described the object of the invention in sufficient detail, there only remains to be said that the embodiments resulting from variations in shape, sizes, materials and the like, as well as those resulting from a routine application of the preceding teachings should be deemed as being included within the scope thereof, in compliance with the following claims.

## Claims

1. Safety box for automobiles, characterised in that it is comprised of:
- A casing (1) capable of being inserted in a vehicle panel:
- A receptacle or housing (2) for accomodating the objects to be protected, slidably coupled in the interior of the said casing (1), in such a manner that the said receptacle or housing (2) can be displaced between an open position, at which it is accessible from the outside, and a closed position housed inside the casing (1);
- Electromechanical means (7) for displacing the said receptacle or housing (2) between the said two operating positions;
- A safety device constituted of a latch (19) provided at the posterior part of the casing (1) operatively coupled to the said electromechanical means (7) for opening and closing it, and a cooperative counter-latch (20), correspondingly disposed at the posterior part of the receptacle or housing (2), which prevents this latter from sliding when the box is in a closed position; and
- an electronic device for operating the said electromechanical means (7).

2. Safety box according to claim 1, characterised in that the said electronic device includes a codifying element for a digital opening code or combination, which capacitates the electric source of the electromechanical means (7) for opening/closing the safety device (19-20) and the backward/forward movement of the receptacle (2) within the casing (1).

3. Safety box according to claim 1, characterised in that for the slidable coupling of the receptacle or housing (2) within the casing (1), there is provided a longitudinal slot-guide assembly (3) and a stem (5) correspondingly and respectively provided in a flap (4) of the casing and in the upper base (6) of the receptacle or housing (2).

4. Safety box acccording to claim 1, characterised in that the electromechanical means (7) for the displacement of the receptacle (2), in turn, is comprised of:
- an electric motor (15) with a driving shaft (13) finishing in a worm gear (14);
- A set of gears (10, 11 and 12) , the initial pinion of which (12) is coupled to the said worm gear (14) of the shaft (13) of the motor (15);
- A lever (8) with a slot (9) eccentrically mounted on the end pinion (10) of the said set of gears (10, 11 and 12);
in which the said stem (5) of the receptacle (2) is coupled on the slot (9) of the said eccentric lever, so that when the motor turns in the two possible directions, the backward movement of the receptacle (2) with respect to the casing (1) is produced.

5. Safety box according to claims 1 and 4, characterised in that the latch (19) of the said safety device is laterally displaceable with respect to the casing (1) by means of a handle (21), also eccentrically mounted on the end pinion (10) of the said set of gears (10. 11, 12), which cooperates with lugs (22) provided in the said latch (19); and in that furthermore, the said latch (19) is fixed to the casing (1) by means of a recovery spring (23) which urges it to its original position when the said handle (21) is displaced from the lugs (22) when the handle turns with the movement of the motor (15).

6. Safety box according to claim 1, characterised in that the facade of the receptacle (2) is provided with inwardly faced bevelled edges to limit the crevices in the coupling zone (27) with the casing in a closed position.

**F I G . 1**

F I G. 2

F I G . 3

F I G . 4

F I G . 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 341 182 (GONZALEZ MIRURI) <br> * Claims 1,6,8; column 4, line 64 - column 5, line 5; figures 1,2 * | 1,3,4 | E 05 <br> G 1/00 <br> B 60 R 7/04 |
| | — — — | | |
| A | US-A-1 654 045 (HOWELL) <br> * Page 1, lines 72-77; page 1, line 107 - page 2, line 73; page 2, lines 118-129 * | 1,3,4 | |
| | — — — | | |
| A | WO-A-8 703 034 (SIGHOLM) <br> * Claim 1 * | 2 | |
| | — — — — | | |

| | TECHNICAL FIELDS SEARCHED (Int. Cl.5) |
|---|---|
| | B 60 R <br> B 60 P <br> E 05 G <br> G <br> 07 G |

The present search report has been drawn up for all claims

| Place of search | Date of completion of search | Examiner |
|---|---|---|
| The Hague | 23 January 91 | VAN KESSEL J.J. |